# EUROPEAN PATENT SPECIFICATION

(11) **EP 0 750 016 B1**
(45) Date of publication and mention of the grant of the patent: **17.12.2003**
(21) Application number: 96304560.4
(22) Date of filing: 19.06.1996
(51) Int. Cl.: C08L 79/00, C08L 67/02, C08L 67/03, C08L 77/00, C08L 69/00, C08L 55/02, C08L 71/12

(54) **Molecular composite material composed of polyazomethine and thermoplastic polymer and method for producing same**
Molekularer Verbundwerkstoff mit Polyazomethin und thermoplastischem Polymer und dessen Herstellungsverfahren
Matériau composite moléculaire composé de polyazométhine et polymère thermoplastique et méthode pour le produire

(30) Priority: 20.06.1995 JP 17674095; 21.06.1995 JP 17811995; 21.06.1995 JP 17812395
(43) Date of publication of application: 27.12.1996
(73) Proprietor: HONDA GIKEN KOGYO KABUSHIKI KAISHA, Minato-ku, Tokyo (JP)
(72) Inventor: Hattori, Tatsuya, Wako-shi, Saitama-ken (JP); Kagawa, Kazuhiro, Wako-shi, Saitama-ken (JP); Iguchi, Masaru, Wako-shi, Saitama-ken (JP); Matsumoto, Keizo, Wako-shi, Saitama-ken (JP)
(74) Representative: Calamita, Roberto

(56) References cited:
- EP-A- 0 030 417
- EP-A- 0 408 166
- EP-A- 0 503 063
- EP-A- 0 700 972
- US-A- 4 792 587
- DATABASE WPI Week 199247, Derwent Publications Ltd., London, GB; Class A18, AN 1992-387864 & JP 4 288 503 A (UENO PHARM CO LTD) 13 October 1992

## Description

### BACKGROUND OF THE INVENTION

The present invention relates to a molecular composite material with excellent mechanical properties comprising a liquid crystal polymer and a thermoplastic polymer, and a method for producing same.

Liquid crystal polymers such as polyesters, polyazomethines, etc. show excellent mechanical properties. Among them, polyazomethines are promising as reinforcing resins for molecular composite materials because of good mechanical properties. The details of polyazomethines are described in U. S. Patent 4,048,148. To exhibit the properties of these liquid crystal polymers, they should sufficiently be oriented. However, since the orienting of the liquid crystal polymers at the time of forming makes the resultant formed products anisotropic, the liquid crystal polymers can be used only for limited applications. Further, because the liquid crystal polymers per se are brittle, lacking in toughness, and water-absorptive, they are easily deteriorated.

Research has been conducted to provide excellent polymer alloys by blending polyazomethines with thermoplastic polymers such as polyamides. For instance, Japanese Patent Laid-Open No. 3-51118 discloses composite materials obtained by dispersing a polyazomethine precursor in a precursor of a matrix polymer, causing the reaction of the polyazomethine precursor to form polyazomethine as a polymer in situ, and then polymerizing the precursor of a matrix polymer. However, sufficient dispersion cannot be achieved between the liquid crystal polymer and the thermoplastic polymer, mainly because they do not have good compatibility.

Japanese Patent Laid-Open No. 1-320128 discloses a method for extruding a composition of a thermoplastic polymer and a liquid crystal polymer, comprising the steps of extruding the composition at a liquid crystal transition temperature or higher while stretching the resultant rod-shaped extrudate, cutting the rod-shaped extrudate at a constant interval, and extruding it at a liquid crystal transition temperature or lower.

Japanese Patent Laid-Open No. 2-53860 discloses a method for producing a liquid crystal polymer composition, comprising the steps of blending a liquid crystal polymer and a matrix polymer at a temperature at which the liquid crystal polymer is not deformed, and heat-treating the resulting blend at a temperature ranging from a liquid crystal-melting point to a temperature lower than the liquid crystal-melting point by 40°C.

Japanese Patent Laid-Open No. 6-207083 discloses a liquid crystal polyester resin composition comprising a liquid crystal polyester, graphite (or + a fluorocarbon surfactant) in a particular amount, and optionally talc.

However, these methods are not suitable for continuous production of liquid crystal polymer compositions : because of too many processing steps, and the composite materials produced by these methods are insufficient in strength, particularly bending strength.

### OBJECT AND SUMMARY OF THE INVENTION

Accordingly, an object of the present invention is to provide a molecular composite material with excellent mechanical properties comprising a liquid crystal polymer and a matrix polymer.

Another object of the present invention is to provide a molecular composite material having a short electrostatic half-life together with excellent mechanical properties.

A further object of the present invention is to provide a method for producing such a molecular composite material.

As a result of intense research in view of the above objects, it has been found that by blending a liquid crystal polymer and a particular type of a thermoplastic polymer, it is possible to obtain a molecular composite material having excellent mechanical properties as well as short electrostatic half-life, Further, it has been found that by continuously blending a liquid crystal polymer and a thermoplastic polymer by a continuous blending/reaction apparatus, the resultant molecular composite material has excellent mechanical properties. The present invention has been completed based on these findings.

The molecular composite material according to the present invention comprises a liquid crystal polymer and a thermoplastic polymer, wherein the liquid crystal polymer is polyazomethine or its copolymer, and the thermoplastic polymer is at least one selected from the group consisting of (a) at least one of aliphatic, aromatic or partly aromatic polyamides or copolyamides, (b) a polycarbonate, (c) an ABS resin, (d) nylon + an ABS resin, (e) a polycarbonate + a polyarylate, and (f) a polyarylene ether + nylon.

The invention provides a method for producing a molecular composite material from a liquid crystal polymer composed of polyazomethine or its copolymer and a thermoplastic polymer, comprising the step of melt-blending a composition consisting of said liquid crystal polymer and said thermoplastic polymer in an apparatus wherein melt-blending, of said liquid crystal polymer and said thermoplastic polymer is conducted continuously, simultaneously causing a reaction therebetween in the course of said melt-blending, at a temperature equal to or higher than the highest melting point of the said polymers and lower than the lowest decomposition temperature of the said polymers, thereby to allow the continuous production of said molecular composite material, wherein said apparatus is a twin screw plasto mill, twin screw extruder or twin screw blender, and wherein said thermoplastic polymer is at least one selected from the group consisting of (a) at least one of aliphatic, aromatic or partly aromatic polyamides or copolyamides, (b) a polycarbonate, (c) an ABS resin, (d) nylon + an ABS resin, (e) a polycarbonate + a polyarylate, and (f) a polyarylene ether + nylon.

In a preference of the present invention, the molecular composite material comprises a liquid crystal polymer and a thermoplastic polymer, wherein the liquid crystal polymer is polyazomethine or its copolymer, and the thermoplastic polymer is at least one of aliphatic, aromatic or partly aromatic polyamides or copolyamides. This molecular composite material is excellent in physical properties, particularly an electrostatic half-life as short as 100 seconds or less, preferably 70 seconds or less. Such molecular composite material is produced by melt-blending the liquid crystal polymer and the polyamide or copolyamide, at a temperature equal to or higher than a higher melting point between those of both polymers and lower than -a lower decomposition temperature between those of both polymers, for 0.5-60 minutes.

In a further preference of the present invention, the molecular composite material comprises a liquid crystal polymer composed of polyazomethine or its copolymer and a polycarbonate. This molecular composite material is produced by melt-blending the liquid crystal polymer and the polycarbonate, at a temperature equal to or higher than a higher melting point between those of both polymers and lower than a lower decomposition temperature between those of both polymers.

In a further preference of the present invention, the molecular composite material comprises a liquid crystal polymer composed of polyazomethine or its copolymer, and an ABS resin. This molecular composite material is produced by melt-blending the liquid crystal polymer and the ABS resin, at a temperature equal to or higher than a higher melting point between those of both polymers and lower than a lower decomposition temperature between those of both polymers.

In a further preference of the present invention, the molecular composite material comprises a liquid crystal polymer and a matrix polymer, wherein the liquid crystal polymer is polyazomethine or its copolymer, and the matrix polymer is composed of nylon and an ABS resin. This molecular composite material is produced by melt-blending the liquid crystal polymer and the matrix polymer, at a temperature equal to or higher than the highest melting point among those of the polyazomethine or its copolymer, nylon and ABS resin and lower than the lowest decomposition temperature among those of the polyazomethine or its copolymer, nylon and ABS resin.

In a further preference of the present invention, the molecular composite material comprises a liquid crystal polymer and a matrix polymer, wherein the liquid crystal polymer is polyazomethine or its copolymer, and the matrix polymer is composed of a polycarbonate and a polyarylate. This molecular composite material is produced by melt-blending the liquid crystal polymer, the polycarbonate and the polyarylate.

In a further preference of the present invention, the molecular composite material comprises a liquid crystal polymer and a matrix polymer, wherein the liquid crystal polymer is polyazomethine or its copolymer, and the matrix polymer is a polymer alloy composed of a polyarylene ether and nylon. This molecular composite material is produced by melt-blending the liquid crystal polymer and the matrix polymer, at a temperature equal to or higher than the highest melting point among those of the polyazomethine or its copolymer, polyarylene ether and nylon and lower than the lowest decomposition temperature among those of the polyazomethine or its copolymer, polyarylene ether and nylon.

### BRIEF DESCRIPTION OF THE DRAWINGS

Fig. 1 is a graph showing the measured flexural modulus and bending strength of the molecular composite materials obtained in Examples 4 and 5, together with those of each component;
Fig. 2 is a graph showing the measured flexural modulus and bending strength of the molecular composite materials obtained in Examples 6 and 7, together with those of each component;
Fig. 3 is a graph showing the measured flexural modulus and bending strength of the molecular composite materials obtained in Examples 18 and 19, together with those of each component;
Fig. 4 is a graph showing the measured flexural modulus and bending strength of the molecular composite materials obtained in Examples 20-22;
Fig. 5 is a graph showing the measured deflection of the molecular composite materials obtained in Examples 20-22;
Fig. 6 is a graph showing the measured flexural modulus and bending strength of the molecular composite materials obtained in Examples 23 and 24, together with those of each component;
Fig. 7 is a graph showing the measured flexural modulus and bending strength of the molecular composite materials obtained in Examples 25 and 26, together with those of each component;
Fig. 8 is a graph showing the measured flexural modulus and bending strength of the molecular composite materials obtained in Examples 27 and 28, together with those of each component;
Fig. 9 is a graph showing the measured flexural modulus and bending strength of the molecular composite materials obtained in Examples 29 and 30, together with those of each component; and
Fig. 10 is a graph showing the measured flexural modulus and bending strength of the molecular composite materials obtained in Examples 31 and 32, together with those of each component.

### DETAILED DESCRIPTION OF THE PREFERRED EMBODIMENTS

The present invention will be explained in detail below.

### [1] Molecular composite material

The molecular composite material of the present invention comprises a liquid crystal polymer and a thermoplastic polymer.

### [A] Liquid crystal polymer

The liquid crystal polymers which may be used in the present invention are thermotropic liquid crystal polymers, for instance, polyazomethines, polyesters, polyester amides or copolymers thereof. The preferred liquid crystal polymer is polyazomethine or its copolymer.

### (a) Chemical structure of polyazomethine or its copolymer

Polyazomethine is represented, for instance, by the following general formula: 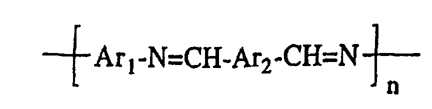 wherein Ar₁ and Ar₂ are aromatic residual groups, and n is an integer.

A copolymer of polyazomethine is represented, for instance, by the following general formula: 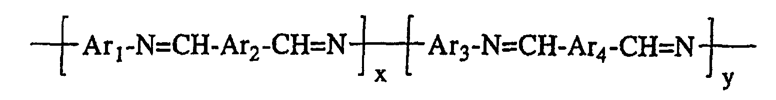 wherein Ar₁, Ar₂, Ar₃ and Ar₄ are aromatic residual groups, and x and y are integers.

In either of the above polyazomethine and copolymer thereof, the aromatic residual groups Ar₁, Ar₂, Ar₃ and Ar₄ are preferably substituted or unsubstituted phenylene or biphenylene groups. The substituent groups attached to the phenylene or biphenylene groups may be alkyl groups having preferably 1-5 carbon atoms, alkoxy groups having preferably 1-5 carbon atoms, a hydroxyl group, halogen groups, etc.

The specific examples of polyazomethine may be as follows: 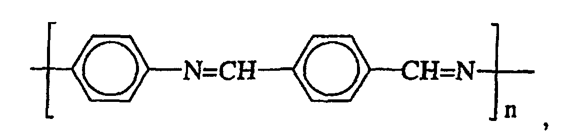 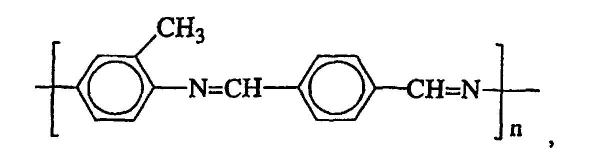 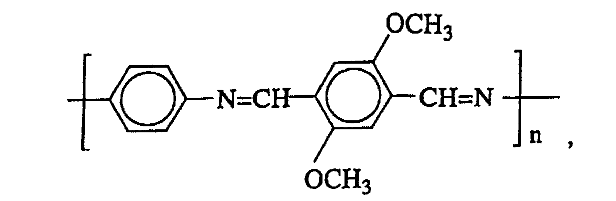 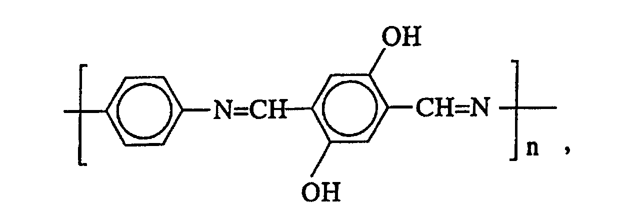 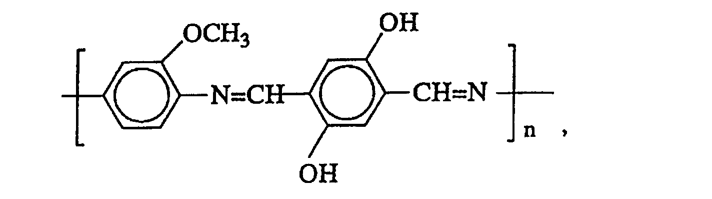 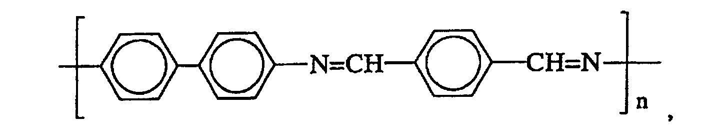 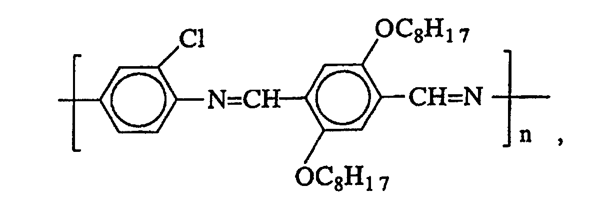 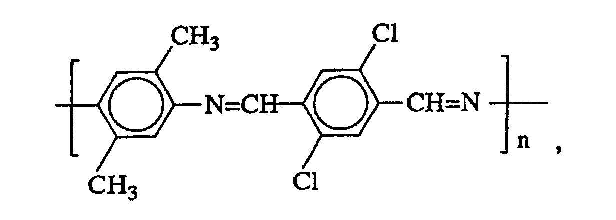 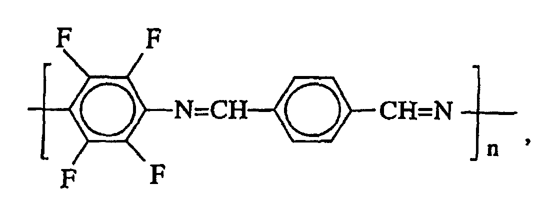 and 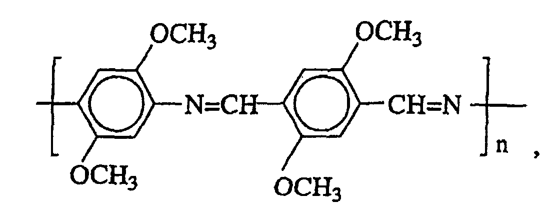 wherein n is an integer.

The specific examples of polyazomethine copolymers may be as follows: 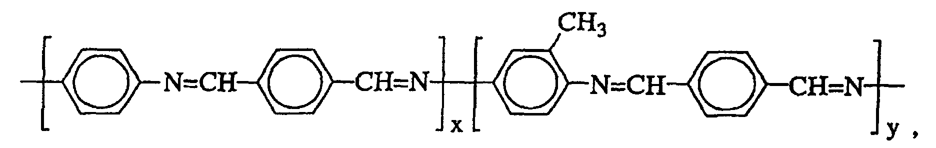 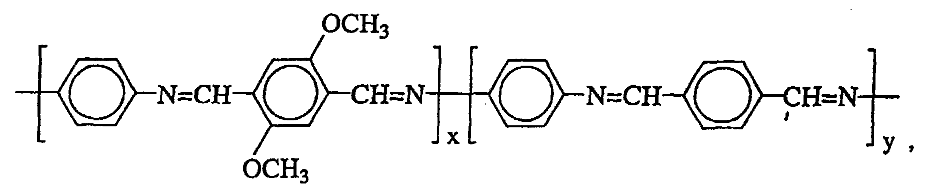 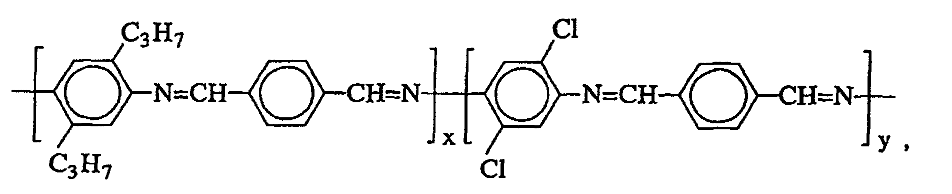 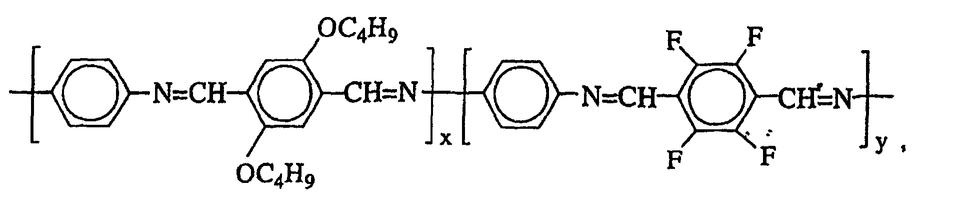 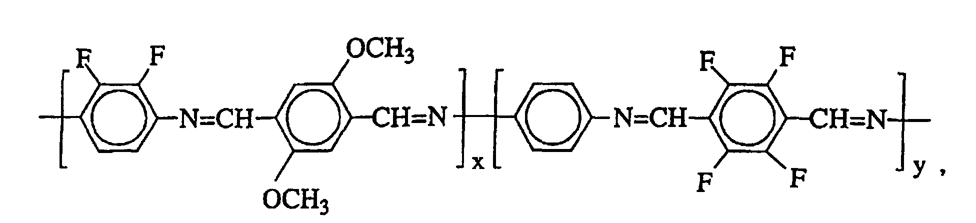 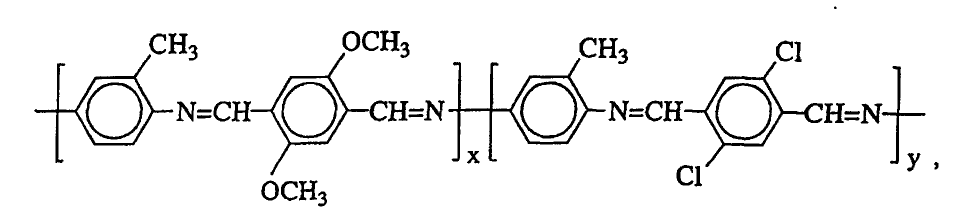 wherein x and y are integers.

Since the explanation of polyazomethine is essentially applicable to the copolymer of polyazomethine, explanation will be made only on the polyazomethine below. Accordingly, it should be noted that when there is no explanation on the copolymer of polyazomethine, the explanation of polyazomethine will be applicable to its copolymer as it is.

### (b) Production of polyazomethine

Polyazomethine may be formed by polymerizing aromatic diamine and aromatic dialdehyde. The preferred aromatic diamines are substituted or unsubstituted p-phenylene diamines. The preferred aromatic dialdehydes are terephthalaldehyde, etc. Examples of the substituted phenylene diamines are p-tolylenediamine, 2-chloroparaphenylene diamine, etc. The production method of polyazomethine itself is known in the art as disclosed in U. S. Patent 4,048,148.

A typical production method of polyazomethine is as follows: Aromatic diamine, N-methyl-2-pyrrolidone and lithium carbonate are introduced into a three-necked flask and stirred, and terephthalaldehyde is added and stirred for 0.5-6 hours. To keep sufficient stirring, an appropriate amount of N-methyl-2-pyrrolidone is preferably added in the course of reaction. Thereafter, p-aminoacetanilide is added and further stirred for 16-48 hours. After completion of reaction, the resultant reaction product is washed with water and methanol several times and then vacuum-dried at about 80°C to obtain polyazomethine.

### (c) Properties of polyazomethine

The polyazomethine preferably has an average molecular weight of 3,000-100,000 and a logarithmic viscosity number of 0.5-2.5 dl/g at 30°C in sulfuric acid, more preferably 1.0-2.0 dl/g. When the average molecular weight is less than 3,000, the resultant molecular composite material has insufficient strength. On the other hand, when the average molecular weight exceeds 100,000, the polyazomethine shows too large melt viscosity, resulting in poor formability in the resultant molecular composite material.

### (d) Heat treatment of polyazomethine

A heat treatment increases the molecular weight of polyazomethine, contributing to an improvement of mechanical properties of molecular composite materials produced therefrom. The heat treatment conditions are preferably a temperature range of 180-280°C and a time period of 0.5-5 hours, more preferably 210-250°C and 1-2 hours. With respect to the heat treatment temperature, when it is lower than 180°C, sufficient heat treatment effects cannot be obtained. On the other hand, when it exceeds 280°C, the polyazomethine is melted. With respect to the heat treatment time, when it is shorter than 0.5 hours, sufficient heat treatment effects cannot be obtained. Oh the other hand, even if it exceeds 5 hours, further effects would not be able to be obtained.

### [B] Thermoplastic polymer

### (a) Types of thermoplastic polymers

The thermoplastic polymers which are of interest include (1) polyamides such as aliphatic, aromatic or partly aromatic polyamides or copolyamides; (2) polyesters, (3) polycarbonates, (4) ABS resins, (5) nylon + ABS resins, (6) polycarbonates + polyarylates, and (7) polyarylene ethers + nylon. These thermoplastic polymers function to reduce the anisotropy of the formed polyazomethine-based, molecular composite materials, thereby imparting excellent mechanical properties to them.

### (1) Polyamides

The polyamides are aliphatic, aromatic or partly aromatic polyamides or copolyamides. The preferred polyamides are aliphatic, aromatic or partly aromatic nylon. The aliphatic, aromatic or partly aromatic polyamides or copolyamides may be used alone or in combination. One example of the preferred nylon is an aliphatic polyamide constituted by structural units represented by the following general formula: 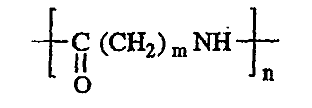 wherein m is an integer of 1-12. Particularly preferable as such aliphatic polyamide is nylon 6.

In the present invention, it is preferable to use industrial-grade nylon. Such industrial-grade nylon may be 1018I nylon 6, 1022B nylon 6, etc. (available from Ube Industries, Ltd.), MX nylon (partly aromatic nylon available from Mitsubishi Gas Chemical Company, Inc.), etc. The term "industrial grade" used herein means that nylon is commonly used for various industrial applications such as injection moldings, fibers, etc. The industrial-grade nylon may contain small amounts of low-molecular weight polyamide components.

### (2) Polyesters

Polymers of interest are aromatic polyesters, including polyarylate, polyethylene terephthalate and polybutylene terephthalate. The polyarylate is a polycondensate of a divalent phenol such as bisphenol A and an aromatic dicarboxylic acid such as terephthalic acid, isophthalic acid, etc. The polyarylate has a structural unit represented by the following general formula: 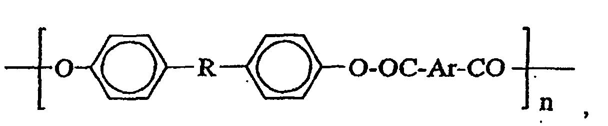 wherein R is an alkylene group, and Ar is an aromatic residue.

A typical example of the polyarylate is represented by the following formula:

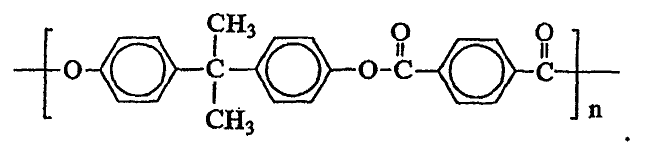

Polyesters of interest may be homopolymers or copolymers, or blends based on polyesters and minor amounts of other polymers. Commercially available polyesters may preferably be used. Examples of commercially available polyarylates are U-Polymer (available from UNITIKA Ltd.), Arylon (available from E. I. du Pont de Numours and Company), Ardel (available from Amoco Japan), etc. Examples of commercially available polyethylene terephthalate are TR8550T-6 (available from Teijin, Ltd.), etc. Examples of commercially available polybutylene terephthalate are C7000N (available from Teijin, Ltd.), 1401x07 (available from Toray Industries, Inc.), Planack BT-100 (available from Dai-Nippon Ink and Chemicals, Inc.), etc. These polyesters may be used alone or in combination.

### (3) Polycarbonates

The polycarbonates used in the present invention may be represented by the following general formula: 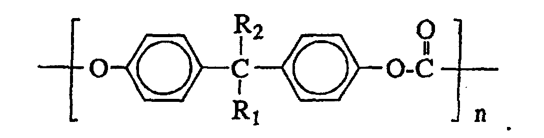 wherein R₁ and R₂ are a hydrogen atom or an alkyl group having 10 or less carbon atoms.

Examples of commercially available polycarbonates are Polycarbonate (available from Aldrich), Toughlon (available from Idemitsu Petrochemical Co., Ltd.), Barton (available from I. C. I. Japan), Esbrit (available from Nippon Steel Chemical Co., Ltd.), Gunpla (available from Sumitomo Electric Industries, Ltd.), Daikomp (available from Dai-Nippon Ink and Chemicals, Inc.), Panlite (available from Teijin Chemicals, Inc.), Lexan (available from Nippon GE Plastics), Macrolon and Microblend (available from Bayer Japan), Novarex (available from Mitsubishi Chemical Corporation), Upiron (available from Mitsubishi Gas Chemical Company, Inc.), Pyrophilpellet (available from Mitsubishi Rayon Co., Ltd.), etc. These polycarbonates may be used alone or in combination.

### (4) ABS resins

The ABS resin used in the present invention is a copolymer of acrylonitrile, butadiene and styrene, preferably having a composition of 10-40 weight % acrylonitrile and 10-40 weight % butadiene, the balance being substantially styrene. Commercially available ABS resins may preferably be used. Examples of commercially available ABS resins include Cycolac (available from Ube Cycolac K.K.), etc. The ABS resins may be used alone or in combination.

### (5) Nylon + ABS resins

The matrix polymer comprising nylon and an ABS resin may be a blend or a copolymer of nylon and an ABS resin. The nylon and the ABS resin per se may be the same as those described in (1) and (4) above. A weight ratio of nylon to the ABS resin may preferably be from 5/95 to 95/5. The matrix polymer may also contain reinforcing materials such as glass fibers, etc.

Commercially available matrix polymers (nylon + ABS resin) may preferably be used. Examples of commercially available matrix polymers (nylon + ABS resin) include AK102 (available from Japan Synthetic Rubber Co., Ltd.), etc.

### (6) Polycarbonates + polyarylates

The matrix polymer comprising a polycarbonate and an a polyarylate is preferably a polymer alloy of these two polymers. The polycarbonate and the polyarylate per se may be the same as those described in (3) and (2) above. The polymer alloy may be commercially available, for instance, as Aryalloy and C300 (available from UNITIKA Ltd.), etc. The polymer alloy may contain solubilizing agents.

In the case of using the matrix polymer comprising a polycarbonate and an a polyarylate, the amount of the liquid crystal polymer is preferably 5-95 weight %, the amount of the polycarbonate is preferably 3-93 weight %, and the amount of the polyarylate is preferably 2-92 weight %. When the amount of the liquid crystal polymer is less than 5 weight %, sufficient reinforcing effects cannot be achieved. On the other hand, when the amount of the liquid crystal polymer exceeds 95 weight %, the resultant molecular composite materials are too brittle.

More preferably, the amount of the liquid crystal polymer is 20-85 weight %, the amount of the polycarbonate is 5-70 weight %, and the amount of the polyarylate is 10-75 weight %. Most preferably, the amount of the liquid crystal polymer is 25-75 weight %, the amount of the polycarbonate is 10-60 weight %, and the amount of the polyarylate is 15-65 weight %.

### (7) Polyarylene ethers + nylon

The polyarylene ether has a repeating unit represented by the following general formula: 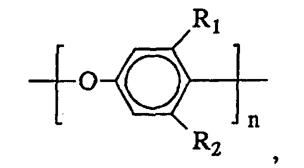 wherein R₁ and R₂ are a hydrogen atom or an alkyl group having 1-6 carbon atoms.

The preferred example of the polyarylene ether is poly(2,6-dimethylphenylene ether) represented by the following formula:

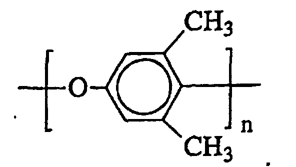

The matrix polymer comprising a polyarylene ether and nylon is preferably a polymer alloy of these two polymers. The preferred composition of the matrix polymer is that the amount of the polyarylene ether is 5-95 weight % and the amount of nylon is 95-5 weight %. The matrix polymer may also contain reinforcing materials such as glass fibers, etc. The nylon per se may be the same as those described in (1) above.

The polymer alloys of the polyarylene ether and nylon which may be commercially available are Noryl (available from GE Plastics Japan), Upiace (available from Mitsubishi Gas Chemical Company, Inc.), Remalloy Series (available from Mitsubishi Petrochemical Co., Ltd.), Sumitomo SPA Artry (available from Sumitomo Chemical Co., Ltd.), etc.

### (b) Average molecular weight of thermoplastic polymer

The thermoplastic polymer [either one of (1)-(7)] preferably has an average molecular weight of 5,000-100,000. When the average molecular weight of the thermoplastic polymer is less than 5,000, the resultant molecular composite materials have poor mechanical strength. On the other hand, when the average molecular weight of the thermoplastic polymer exceeds 100,000, the thermoplastic polymer has too high melt viscosity, resulting in poor formability in the resultant molecular composite material

### [2] Production of molecular composite material

### [A] Blending ratio

The molecular composite material of the present invention may be produced by blending the liquid crystal polymer and thermoplastic polymer at a uniform temperature. A weight ratio of the liquid crystal polymer to the thermoplastic polymer is preferably 10:90-90:10, particularly 30:70-85:15. When the amount of the liquid crystal polymer is less than 10 weight %, the liquid crystal polymer fails to sufficiently reinforce the resultant molecular composite material. On the other hand, when the amount of the liquid crystal polymer exceeds 90 weight %, the resultant molecular composite material undesirably shows brittleness.

### [B] Blending apparatus

The blending apparatus usable for the production of the molecular composite materials according to the present invention may preferably be a continuous blending/reaction apparatus such as a single-screw extruder, a twin-screw extruder, a multi-screw extruder, etc. Particularly preferable as the continuous blending/reaction apparatus is a twin-screw extruder because of high blending power. The term "continuous blending/reaction" used herein means that blending of component polymers is carried out continuously, simultaneously causing a reaction therebetween.

### [C] Blending temperature

The blending temperature may be changeable depending on the types of the liquid crystal polymers, the thermoplastic polymers and if any the compatibilizing agents, but it should be equal to or higher than the highest melting point of the components (liquid crystal polymer, thermoplastic polymer and if any, compatibilizing agent) and lower than the lowest decomposition temperature of the components.

The blending temperature is generally 230-340°C, preferably 250-320°C, more preferably 260-290°C, most preferably 260-280°C. When the blending temperature is lower than 230°C, the liquid crystal polymer and the thermoplastic polymer are not well dissolved in each other. On the other hand, when the blending temperature exceeds 340°C, the constituent polymers are likely to be decomposed.

### [D] Blending time

The liquid crystal polymer and the thermoplastic polymer may be introduced into the blending apparatus simultaneously or successively in an arbitrary order.

The blending time of the liquid crystal polymer and the thermoplastic polymer may be changeable depending on their types, but it is preferably 0.5-60 minutes, more preferably 5-60 minutes. When the blending time is shorter than 0.5 minutes, sufficient blending cannot be achieved. On the other hand, when the blending time exceeds 60 minutes, the number of double bonds in the liquid crystal polymer decreases, resulting in decreased liquid crystallinity.

Particularly, in the blending of the liquid crystal polymer and the thermoplastic polymer by a continuous blending/reaction apparatus while heating at a desired temperature, the blending time may preferably be 0.5-30 minutes, more preferably 2-20 minutes to produce a molecular composite material with excellent properties continuously.

The present invention will be explained in further detail by the following Examples without intention of restricting the scope of the present invention defined by the claims attached hereto.

### Synthesis Example 1

97.5 g of p-tolylenediamine hydrochloride, 375 ml of N-methyl-2-pyrrolidone and 37.0 g of lithium carbonate were introduced into a three-necked flask. After stirring, 67.0 g of terephthalaldehyde was added and stirred for 3 hours. In the course of reaction, an appropriate amount of N-methyl-2-pyrrolidone was added to keep sufficient stirring. Thereafter, 1.0 g of p-aminoacetanilide was added and further stirred for 20 hours to conduct reaction. The resultant reaction product was filtered out, washed with water and methanol several times, and vacuum-dried at 80°C to obtain 107.3 g of polyazomethine powder in orange color. This polyazomethine powder was heat-treated at 230°C for 2 hours to obtain polyazomethine having a logarithmic viscosity number of 1.9 dl/g at 30°C in sulfuric acid.

### Example 1

Nylon 6 (average molecular weight = 17,000, available from Aldrich) was uniformly mixed with amino caproic acid in an amount of 0.107 weight % based on nylon 6 to form nylon pellets, and the nylon pellets were dry-blended with polyazomethine obtained in Synthesis Example 1 at a weight ratio of 3:7. The resultant blend was introduced into a twin-screw extruder having a screw diameter of 25 mm and a die diameter of 6 mm available from Kuriyama Seikojo K. K. to melt-blend them at a resin temperature of 270°C and at a screw rotation of 80 rpm while causing a reaction therebetween. The resultant blend was extruded as a strand while being cooled by air and then cut to pellets. The resultant pellets were injection-molded into planer test pieces of 50 mm x 15 mm x 2.5 mm. Three-point bending test was conducted on each planer test piece to measure a bending strength and a flexural modulus thereof. The results are shown in Table 1.

### Example 2

A molecular composite material was produced from the same ingredients and by the same method as in Example 1 except that the strand was cooled by passing through a water bath at 18°C. Three-point bending test was conducted in the same manner as in Example 1 to measure a bending strength and a flexural modulus thereof. The results are shown in Table 1.

### Example 3

A molecular composite material was produced from the same ingredients and by the same method as in Example 1 except that the strand was cooled by passing through a warm water bath at 60°C. Three-point bending test was conducted in the same manner as in Example 1 to measure a bending strength and a flexural modulus thereof. The results are shown in Table 1.

**Table 1**

| No. | Bending Strength (kgf/mm²) | Flexural Modulus (kgf/mm²) |
|---|---|---|
| Example 1 | 13.5 | 937 |
| Example 2 | 14.8 | 1007 |
| Example 3 | 14.9 | 1019 |

As is clear from Table 1, the molecular composite materials of Examples 1-3 showed high bending strength and flexural modulus, indicating that the liquid crystal polymer is well dispersed in the thermoplastic polymer matrix by the method of the present invention.

### Example 4

Polyazomethine obtained in Synthesis Example 1 and nylon 6 (1022B, available from Ube Industries, Ltd.) were introduced at a weight ratio of 7:3 into a chamber of a laboratory-type twin-screw plasto-mill rotating at 50 rpm to carry out melt blending at 270°C. After melt-blending for 22 minutes, the screw of the plasto-mill was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 2.

### Example 5

Planer test pieces were produced in the same manner as in Example 4 except for blending the polyazomethine with nylon 6 (1022B) at a weight ratio of 3:7 for 10 minutes. Three-point bending test was conducted on this planer test piece to measure a bending strength and a flexural modulus thereof. The results are shown in Table 2.

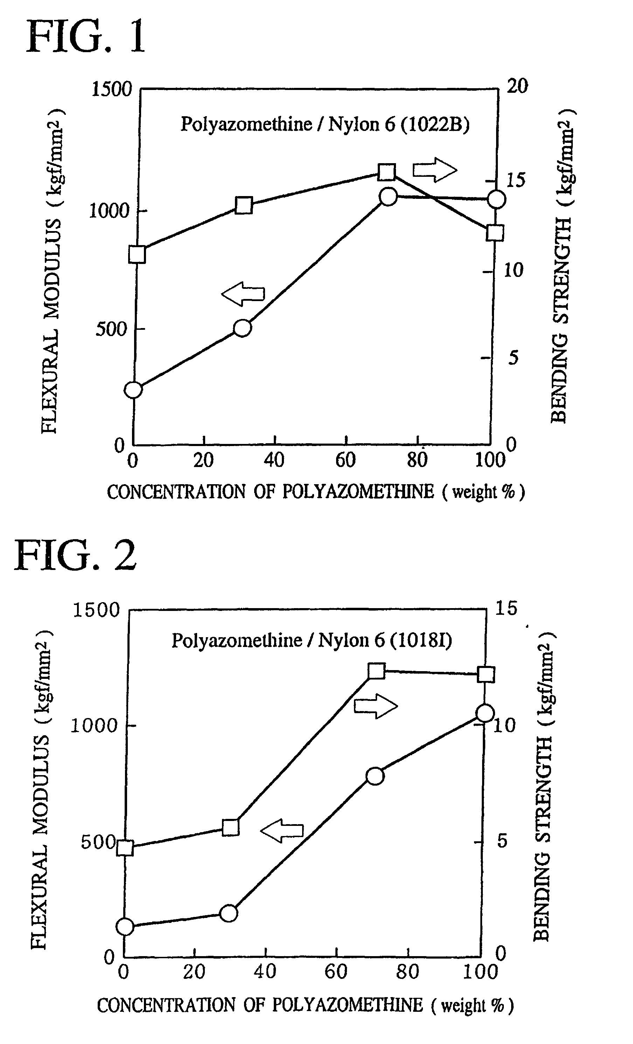

The three-point bending test results in Examples 4 and 5 are shown in Fig. I together with those obtained on test pieces each composed only of polyazomethine or nylon 6 (1022B). As is clear from Fig. 1, the molecular composite materials composed of polyazomethine and industrial-grade nylon 6 showed higher bending strength than the arithmetic mean of those of a test piece consisting only of polyazomethine and a test piece consisting only of nylon 6 (1022B), indicating that the combination of polyazomethine and industrial-grade nylon 6 exerts synergistic effects.

### Example 6

Polyazomethine obtained in Synthesis Example 1 and nylon 6 (1018I available from Ube Industries, Ltd.) were introduced at a weight ratio of 7:3 into a chamber of a laboratory-type twin-screw plasto-mill rotating at 50 rpm to carry out melt blending at 270°C. After melt-blending for 25 minutes, the screw of the plasto-mill was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 2.

### Example 7

Planer test pieces were produced in the same manner as in Example 6 except for blending the polyazomethine with nylon 6 (1018I) at a weight ratio of 3:7 for 20 minutes. Three-point bending test was conducted on this planer test piece to measure a bending strength and a flexural modulus thereof. The results are shown in Table 2.

The three-point bending test results in Examples 6 and 7 are shown in Fig. 2 together with those obtained on test pieces each composed only of polyazomethine or nylon 6 (1018I). As is clear from Fig. 2, the molecular composite materials composed of polyazomethine and industrial-grade nylon 6 showed higher bending strength than the arithmetic mean of those of a test piece consisting only of polyazomethine and a test piece consisting only of nylon 6 (1018I), indicating that the combination of polyazomethine and industrial-grade nylon 6 exerts synergistic effects.

### Example 8

Polyazomethine obtained in Synthesis Example 1 and MX nylon (partly aromatic nylon available from Mitsubishi Gas Chemical Company, Inc.) having the following molecular structure: 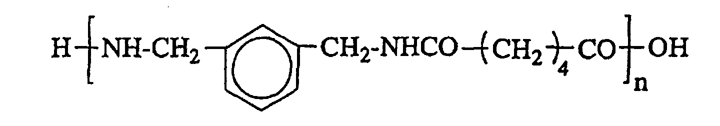 were introduced at a weight ratio of 7:3 into a chamber of a laboratory-type twin-screw plasto-mill rotating at 50 rpm to carry out melt blending at 270°C. After melt-blending for 30 minutes, the screw of the plasto-mill was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 2.

### Example 9

Planer test pieces were produced in the same manner as in Example 8 except for blending the polyazomethine with MX nylon at a weight ratio of 3:7 for 20 minutes. Three-point bending test was conducted on this planer test piece to measure a bending strength and a flexural modulus thereof. The results are shown in Table 2.

### Example 10

Nylon 6 (average molecular weight = 17,000, available from Aldrich) was uniformly mixed with amino caproic acid in an amount of 0.107 weight % based on nylon 6 to form nylon pellets, and the nylon pellets were dry-blended with polyazomethine obtained in Synthesis Example 1 at a weight ratio of 3:7. The resultant blend was introduced into a twin-screw extruder having a screw diameter of 25 mm and a die diameter of 6 mm available from Kuriyama Seikojo K. K. to melt-blend them at a resin temperature of 270°C and at a screw rotation of 80 rpm while causing a reaction therebetween. The resultant pellets were injection-molded into planer test pieces of 50 mm x 15 mm x 2.5 mm. Three-point bending test was conducted on each planer test piece to measure a bending strength and a flexural modulus thereof. The results are shown in Table 2.

**Table 2**

| No. | Bending Strength (kgf/mm²) | Flexural Modulus (kgf/mm²) |
|---|---|---|
| Example 4 | 15.4 | 1059.0 |
| Example 5 | 13.6 | 514.5 |
| Example 6 | 12.3 | 779.0 |
| Example 7 | 5.6 | 198.0 |
| Example 8 | 13.6 | 1074.0 |
| Example 9 | 9.0 | 450.0 |
| Example 10 | 15.4 | 1059.0 |

### Example 11

With respect to the test pieces produced in the same manner as in Example 10, electric properties and specific gravity were measured by the following methods. Measurement was conducted also on test pieces each composed only of nylon 6 (1013B) or nylon 66 (2020B available from Ube Industries, Ltd.). The results are shown in Table 3.

### (1) Volume resistivity (Ω·cm)

After charging 1 minute under the conditions of 23°C, relative humidity of 50% and DC voltage of 500 V, the resistance of each test piece was measured by a resistance meter (available from Yokogawa-Hewlett-Packard, Ltd.) according to JIS C2125.

### (2) Surface resistivity (Ω)

After charging 1 minute under the conditions of 23°C, relative humidity of 50% and DC voltage of 500 V, the resistance of each test piece was measured by a resistance meter (available from Yokogawa-Hewlett-Packard, Ltd.) according to JIS C2151.

### (3) Dielectric constant

Measured under the conditions of 23°C, relative humidity of 50% and frequency of 1 kHz by a TR-100 dielectric loss meter (available from Ando Electric Co., Ltd.) according to ASTM D150.

### (4) Dielectric dissipation factor

Measured under the conditions of 23°C, relative humidity of 50% and frequency of 1 kHz by a TR-100 dielectric loss meter according to ASTM D150.

### (5) Electrostatic half-life (second)

After charging at a voltage of 10 kV for 1 minute, it was measured under the conditions of 23°C and relative humidity. of 50% by a static onestometer (available from Shishido Shokai K.K.) according to a static onestometer method.

### (6) Specific gravity

After leaving under the conditions of 23°C and relative humidity of 50% for 40 hours, the specific gravity was measured by a water displacement method.

**Table 3**

| Properties | Example 11 | Nylon 6 | Nylon 66 |
|---|---|---|---|
| Volume Resistivity ( Ω·cm) | 7.6 x 10¹⁵ | 1 x 10¹⁵ | 1 x 10¹⁵ |
| Surface Resistivity (Ω) | 5.8 x 10¹⁵ | - | - |
| Dielectric Constant | 3.5 | 3.8 | 3.8 |
| Dielectric Dissipation Factor | 0.0171 | 0.02 | 0.02 |
| Electrostatic Half-Life (sec.) | 50 | 660 | 3711 |
| Specific Gravity | 1.189 | 1.14 | 1.14 |

As is clear from Table 3, the molecular composite material of the present invention has a much shorter electrostatic half-life than those of nylon 6 (1013B) or nylon 66 (2020B).

### Example 12

Polyazomethine obtained in Synthesis Example 1 and polyarylate (U-Polymer, available from UNITIKA Ltd.) were introduced at a weight ratio of 3:7 into a nitrogen gas-filled chamber of a twin-screw blender rotating at 50 rpm to carry out melt blending at 270°C. After melt-blending for 25 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 4.

### Example 13

Planer test pieces were produced in the same manner as in Example 12 except for blending the polyazomethine with U-Polymer at a weight ratio of 7:3 for 10 minutes. Three-point bending test was conducted on this planer test piece to measure a bending strength and a flexural modulus thereof. The results are shown in Table 4.

### Example 14 (not an Example of the current invention)

Polyazomethine obtained in Synthesis Example 1 and polyethylene terephthalate (TR8550T-6, available from Teijin, Ltd.) were introduced at a weight ratio of 3:7 into a nitrogen gas-filled chamber of a twin-screw blender rotating at 50 rpm to carry out melt blending at 270°C. After melt-blending for 30 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 4.

### Example 15 (not an Example of the current invention)

Planer test pieces were produced in the same manner as in Example 14 except for blending the polyazomethine with polyethylene terephthalate (TR8550T-6) at a weight ratio of 7:3 for 30 minutes. Three-point bending test was conducted on this planer test piece to measure a bending strength and a flexural modulus thereof. The results are shown in Table 4.

### Example 16 (not an Example of the current invention)

Polyazomethine obtained in Synthesis Example 1 and polybutylene terephthalate (C7000N, available from Teijin, Ltd.) were introduced at a weight ratio of 3:7 into a nitrogen gas-filled chamber of a twin-screw blender rotating at 50 rpm to carry out melt blending at 270°C. After melt-blending for 30 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 4.

### Example 17 (not an Example of the current invention)

Planer test pieces were produced in the same manner as in Example 16, except for blending the polyazomethine with polybutylene terephthalate (C7000N) at a weight ratio of 7:3. Three-point bending test was conducted in the same manner as in Example 16. The results are shown in Table 4.

**Table 4**

| No. | Bending Strength (kgf/mm²) | Flexural Modulus (kgf/mm²) |
|---|---|---|
| Example 12 | 7 .4 | 5 61 |
| Example 13 | 14.6 | 1157 |
| Example 14 | 9.4 | 610 |
| Example 15 | 12.1 | 917 |
| Example 16 | 10.6 | 514.5 |
| Example 17 | 9.4 | 877 |

### Example 18

Polyazomethine obtained in Synthesis Example 1 and Polycarbonate (available from Aldrich) were introduced at a weight ratio of 7:3 into a nitrogen gas-filled chamber of a twin-screw blender rotating at 50 rpm to carry out melt blending at 270°C. After melt-blending for 30 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 5.

### Example 19

Planer test pieces were produced in the same manner as in Example 18 except for blending the polyazomethine with Polycarbonate at a weight ratio of 3:7. Three-point bending test was conducted on this planer test piece to measure a bending strength and a flexural modulus thereof. The results are shown in Table 5.

**Table 5**

| No. | Bending Strength (kgf/mm²) | Flexural Modulus (kgf/mm²) |
|---|---|---|
| Example 18 | 14.1 | 1094 |
| Example 19 | 10.4 | 580 |

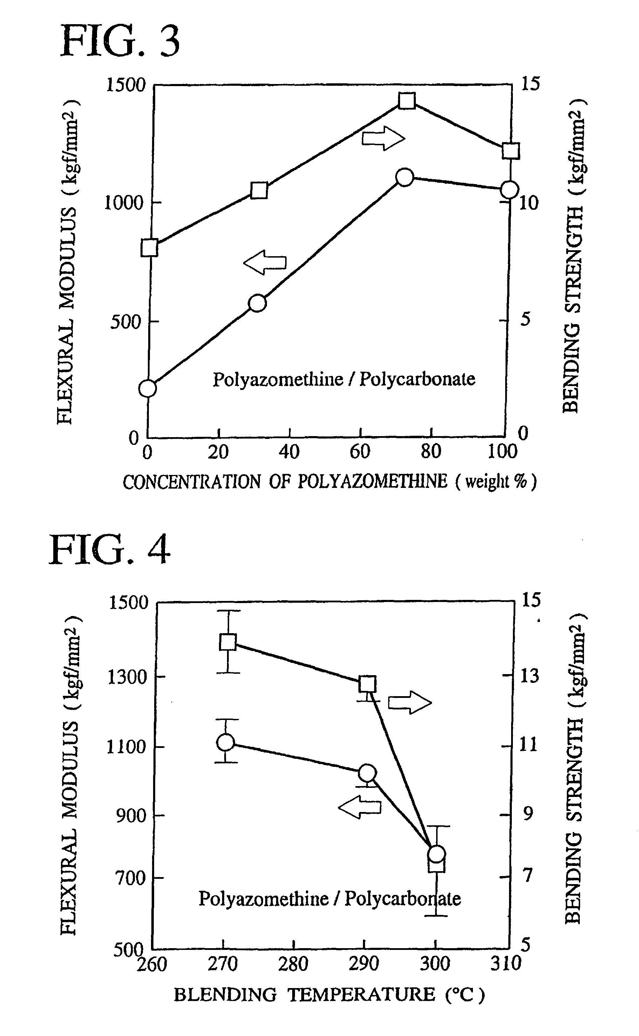

The three-point bending test results in Examples 18 and 19 are shown in Fig. 3 together with those of test pieces each composed only of polyazomethine or polycarbonate. As is clear from Fig. 3, the molecular composite materials composed of polyazomethine and polycarbonate showed higher bending strength than the arithmetic mean of those of a test piece consisting only of polyazomethine and a test piece consisting only of polycarbonate, indicating that the combination of polyazomethine and polycarbonate exerts synergistic effects.

### Example 20

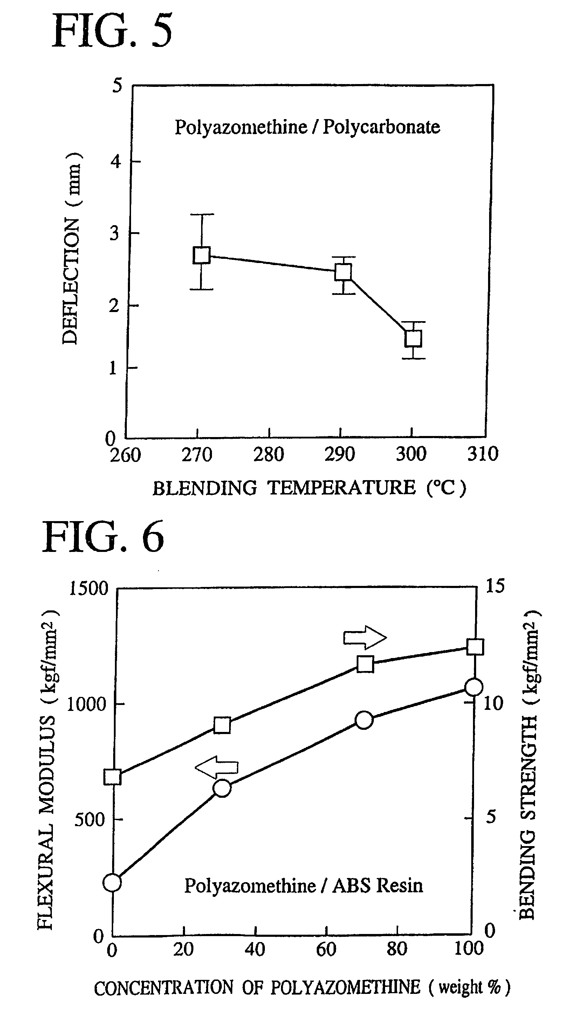

Polyazomethine obtained in Synthesis Example 1 and Polycarbonate (available from Aldrich) were introduced at a weight ratio of 7:3 into a nitrogen gas-filled chamber of a twin-screw blender rotating at 50 rpm to carry out melt blending at 270°C, thereby providing a planer test piece of 50 mm x 15 mm x 2.5 mm in the same manner as in Example 18. Three-point bending test was conducted on this planer test piece to measure a bending strength and a flexural modulus thereof. The results are shown in Fig. 4. Also, the deflection of the test piece at break was measured. The results are shown in Fig. 5.

### Example 21

Planer test pieces were produced in the same manner as in Example 20 except for blending the polyazomethine with Polycarbonate at 290°C. Three-point bending test was conducted on this planer test piece to measure a bending strength and a flexural modulus thereof. The results are shown in Fig. 4. Also, the deflection of the test piece at break was measured. The results are shown in Fig. 5.

### Example 22

Planer test pieces were produced in the same manner as in Example 20 except for blending the polyazomethine with Polycarbonate at 300°C. Three-point bending test was conducted on this planer test piece to measure a bending strength and a flexural modulus thereof. The results are shown in Fig. 4. Also, the deflection of the test piece at break was measured. The results are shown in Fig. 5.

As is clear from Figs. 4 and 5 showing the three-point bending and deflection test results in Examples 20-22, when the blending temperature is too high, the resulting molecular composite materials exhibit decreased mechanical properties.

### Example 23

Polyazomethine obtained in Synthesis Example 1 and ABS resin (Cycolac, available from Ube Cycon K.K.) were introduced at a weight ratio of 3:7 into a nitrogen gas-filled chamber of a twin-screw blender rotating at 50 rpm to carry out melt blending at 270°C. After melt-blending for 30 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 6.

### Example 24

Planer test pieces were produced in the same manner as in Example 23 except for blending the polyazomethine with the ABS resin at a weight ratio of 7:3. Three-point bending test was conducted on this planer test piece to measure a bending strength and a flexural modulus thereof. The results are shown in Table 6.

**Table 6**

| No. | Bending Strength (kgf/mm²) | Flexural Modulus (kgf/mm²) |
|---|---|---|
| Example 23 | 9.0 | 625 |
| Example 24 | 11.4 | 906 |

The three-point bending test results in Examples 23 and 24 are shown in Fig. 6 together with those of test pieces each composed only of polyazomethine or the ABS resin. As is clear from Fig. 6, the molecular composite materials composed of polyazomethine and ABS resin showed higher bending strength than the arithmetic mean of those of a test piece consisting only of polyazomethine and a test piece consisting only of the ABS resin, indicating that the combination of polyazomethine and ABS resin exerts synergistic effects.

### Example 25

Polyazomethine obtained in Synthesis Example 1 and a nylon/ABS resin blend (AK102, available from Japan Synthetic Rubber Co., Ltd.) were introduced at a weight ratio of 3:7 into a nitrogen gas-filled chamber of a twin-screw blender rotating at 50 rpm to carry out melt blending at 270°C. After melt-blending for 10 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 7.

### Example 26

Planer test pieces were produced in the same manner as in Example 25 except for blending the polyazomethine with AK102 at a weight ratio of 7:3 for 22 minutes. Three-point bending test was conducted on this planer test piece to measure a bending strength and a flexural modulus thereof. The results are shown in Table 7.

**Table 7**

| No. | Bending Strength (kgf/mm²) | Flexural Modulus (kgf/mm²) |
|---|---|---|
| Example 25 | 10.5 | 417 |
| Example 26 | 14.1 | 915 |

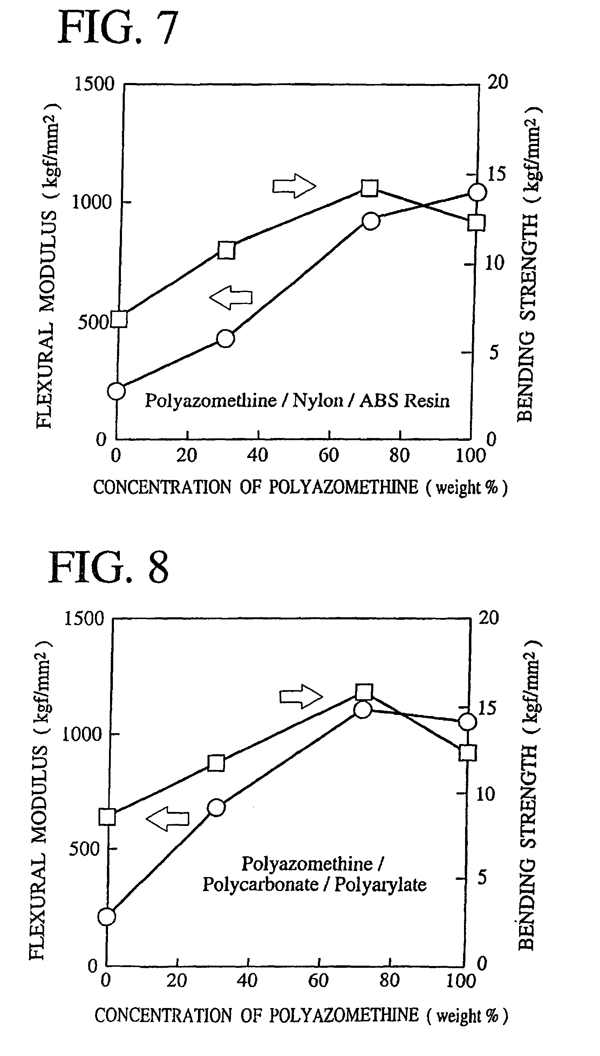

The three-point bending test results in Examples 25 and 26 are shown in Fig. 7 together with those of test pieces each composed only of polyazomethine or a nylon/ABS blend. As is clear from Fig. 7, the molecular composite materials composed of polyazomethine and a nylon/ABS blend showed higher bending strength than the arithmetic mean of those of a test piece consisting only of polyazomethine and a test piece consisting only of the nylon/ABS blend, indicating that the combination of polyazomethine and the nylon/ABS blend exerts synergistic effects.

### Example 27

Polyazomethine obtained in Synthesis Example 1 and a polycarbonate/polyarylate blend (Aryalloy, available from UNITIKA Ltd.) were introduced at a weight ratio of 3:7 into a nitrogen gas-filled chamber of a twin-screw blender rotating at 50 rpm to carry out melt blending at 270°C. After melt-blending for 30 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 8.

### Example 28

Planer test pieces were produced in the same manner as in Example 27 except for blending the polyazomethine with Aryalloy at a weight ratio of 7:3. Three-point bending test was conducted on this planer test piece to measure a bending strength and a flexural modulus thereof. The results are shown in Table 8.

**Table 8**

| No. | Bending Strength (kgf/mm²) | Flexural Modulus (kgf/mm²) |
|---|---|---|
| Example 27 | 11.5 | 676 |
| Example 28 | 15.6 | 1117 |

The three-point bending test results in Examples 27 and 28 are shown in Fig. 8 together with those of test pieces each composed only of polyazomethine or the polymer alloy of polycarbonate/polyarylate. As is clear from Fig. 8, the molecular composite materials composed of polyazomethine and the polycarbonate/polyarylate polymer alloy showed higher bending strength than the arithmetic mean of those of a test piece consisting only of polyazomethine and a test piece consisting only of the polycarbonate/polyarylate polymer alloy, indicating that the combination of polyazomethine, polycarbonate and polyarylate exerts synergistic effects.

### Example 29

Polyazomethine obtained in Synthesis Example 1 and a polymer alloy of polyphenylene ether/nylon (Noryl GTX6006, available from GE Plastics Japan) were introduced at a weight ratio of 3:7 into a nitrogen gas-filled chamber of a twin-screw blender rotating at 50 rpm to carry out melt blending at 270°C. After melt-blending for 30 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 9.

### Example 30

Planer test pieces were produced in the same manner as in Example 29 except for blending the polyazomethine with Noryl GTX6006 at a weight ratio of 7:3 for 15 minutes. Three-point bending test was conducted on this planer test piece to measure a bending strength and a flexural modulus thereof. The results are shown in Table 9.

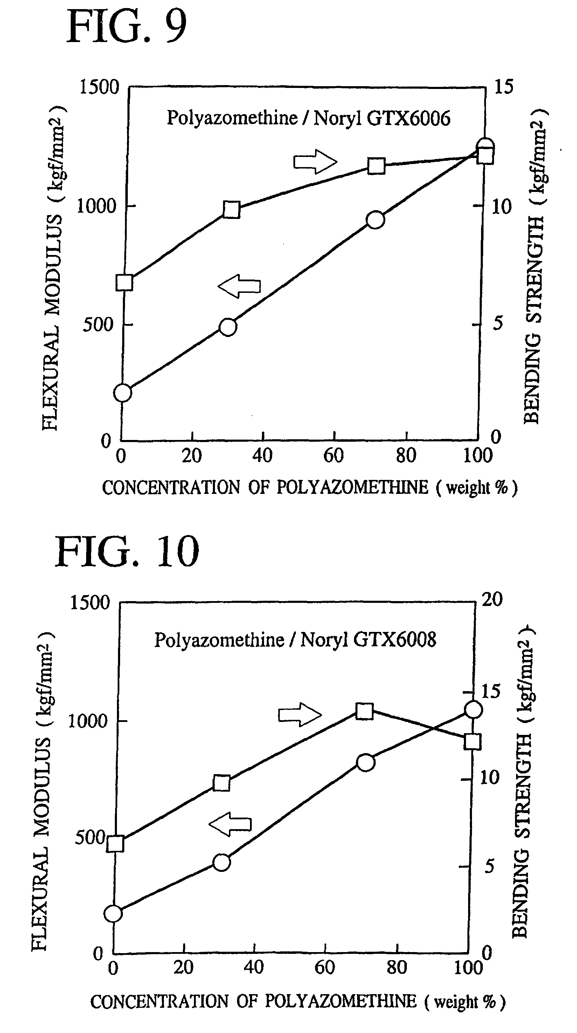

The three-point bending test results in Examples 29 and 30 are shown in Fig. 9 together with those of test pieces each composed only of polyazomethine or Noryl GTX6006. As is clear from Fig. 9, the molecular composite materials composed of polyazomethine and the polyphenylene ether/nylon polymer alloy showed higher bending strength than the arithmetic mean of those of a test piece consisting only of polyazomethine and a test piece consisting only of a polyphenylene ether/nylon polymer alloy, indicating that the combination of polyazomethine, polyarylene ether and nylon exerts synergistic effects.

### Example 31

Polyazomethine obtained in Synthesis Example 1 and a polymer alloy of polyphenylene ether/nylon (Noryl GTX6008, available from GE Plastics Japan) were introduced at a weight ratio of 3:7 into a nitrogen gas-filled chamber of a twin-screw blender rotating at 50 rpm to carry out melt blending at 270°C. After melt-blending for 25 minutes, the screw of the twin-screw blender was stopped to withdraw the resultant resin composition, which was then injection-molded by a small injection molding machine to provide a planer test piece of 50 mm x 15 mm x 2.5 mm. Three-point bending test was conducted on this planer test piece to measure a bending strength and a flexural modulus thereof. The results are shown in Table 9.

### Example 32

Planer test pieces were produced in the same manner as in Example 31 except for blending the polyazomethine with Noryl GTX6008 at a weight ratio of 7:3 for 15 minutes. Three-point bending test was conducted on this planer test piece to measure a bending strength and a flexural modulus thereof. The results are shown in Table 9.

The three-point bending test results in Examples 31 and 32 are shown in Fig. 10 together with those of test pieces each composed only of polyazomethine or Noryl GTX6008. As is clear from Fig. 10, the molecular composite materials composed of polyazomethine and the polyphenylene ether/nylon polymer alloy showed higher bending strength than the arithmetic mean of those of a test piece consisting only of polyazomethine and a test piece consisting only of a polyphenylene ether/nylon polymer alloy, indicating that the combination of polyazomethine, polyarylene ether and nylon exerts synergistic effects.

**Table 9**

| No. | Bending Strength (kgf/mm²) | Flexural Modulus (kgf/mm²) |
|---|---|---|
| Example 29 | 9.9 | 411 |
| Example 30 | 11.7 | 786 |
| Example 31 | 9.8 | 394 |
| Example 32 | 13.9 | 826 |

As described in detail above, by blending a liquid crystal polyazomethine with a particular thermoplastic polymer, it is possible to produce molecular composite materials with excellent mechanical properties. Such molecular composite materials can be used for wide applications such as automobile parts, aircraft parts, spacecraft parts, etc. In addition, because of have a short electrostatic half-life, they are also expected to be used for electronic materials, electronic parts for OA equipments, etc.

## Claims

1. A method for producing a molecular composite material from a liquid crystal polymer composed of polyazomethine or its copolymer and a thermoplastic polymer, comprising the step of melt-blending a composition consisting of said liquid crystal polymer and said thermoplastic polymer in an apparatus wherein melt-blending, of said liquid crystal polymer and said thermoplastic polymer is conducted continuously, simultaneously causing a reaction therebetween in the course of said melt-blending, at a temperature equal to or higher than the highest melting point of the said polymers and lower than the lowest decomposition temperature of the said polymers, thereby to allow the continuous production of said molecular composite material, wherein said apparatus is a twin screw plasto mill, twin screw extruder or twin screw blender, and wherein said thermoplastic polymer is at least one selected from the group consisting of (a) at least one of aliphatic, aromatic or partly aromatic polyamides or copolyamides, (b) a polycarbonate, (c) an ABS resin, (d) nylon + an ABS resin, (e) a polycarbonate + a polyarylate, and (f) a polyarylene ether + nylon.

2. A method for producing a molecular composite material according to claim 1, wherein the melt-blending is conducted at a temperature of 250-320°C for 0.5-30 minutes.

3. A method for producing a molecular composite material according to claim 1 or 2, wherein said thermoplastic polymer is a polyamide or a copolyamide.

4. A molecular composite material obtainable by the method according to claim 1 or claim 2 comprising a liquid crystal polymer and a thermoplastic polymer, wherein said liquid crystal polymer is polyazomethine or its copolymer, and said thermoplastic polymer is at least one selected from the group consisting of (a) at least one of aliphatic, aromatic or partly aromatic polyamides or copolyamides, (b) a polycarbonate, (c) an ABS resin, (d) nylon + an ABS resin, (e) a polycarbonate + a polyarylate, and (f) a polyarylene ether + nylon.

5. A molecular composite material according to claim 4, wherein the amount of said liquid crystal polymer is 10-90 weight %, and the amount of said thermoplastic polymer is 90-10 weight %.

6. A molecular composite material according to claim 4 or 5, obtainable by melt-blending said liquid crystal polymer and said thermoplastic polymer, at a temperature equal to or higher than a higher melting point between those of both polymers and lower than a lower decomposition temperature between those of both polymers, for 0.5-60 minutes.

7. A molecular composite material according to any one of claims 4 to 6, wherein said thermoplastic polymer is (a) at least one of aliphatic, aromatic or partly aromatic polyamides or copolyamides, and wherein said molecular composite material has an electrostatic half-life shorter than those of said polyamides or copolyamides.

8. A molecular composite material according to claim 7, wherein said molecular composite material has an electrostatic half-life of 100 seconds or less, said electrostatic half-life being measured, after charging at 10 kV for 1 minute, at 23°C and 50% relative humidity by static onestometer.

9. A molecular composite material according to any one of claims 4 to 8, wherein said thermoplastic polymer is (e) a polycarbonate + a polyarylate, and wherein the amount of said liquid crystal polymer is 5-95 weight %, the amount of said polycarbonate is 3-93 weight %, and the amount of said polyarylate is 2-92 weight %.

10. A method according to claim 1 wherein the thermoplastic polymer is at least one selected from the group consisting of (a) at least one of aliphatic, aromatic or partly aromatic polyamides or copolyamides, (b) a polycarbonate, (c) an ABS resin, (d) nylon + an ABS resin, (e) a polycarbonate + a polyarylate, and (f) a polyarylene ether + nylon.

11. A method for producing a molecular composite material according to claim 10, wherein the melt-blending is conducted at a temperature of 230-340°C.

12. A method for producing a molecular composite material according to claim 11, wherein the melt-blending is conducted at a temperature of 250-320°C.

## Patentansprüche

1. Verfahren zur Herstellung eines molekularen Verbundmaterials aus einem Flüssigkristall-Polymer, das aus Polyazomethin oder dessen Copolymer und einem thermoplastischen Polymer zusammengesetzt ist, umfassend den Schritt des Schmelzmischens einer Zusammensetzung, die aus dem Flüssigkristall-Polymer und dem thermoplastischen Polymer zusammengesetzt ist in einer Vorrichtung, wobei das Schmelzmischen des Flüssigkristall-Polymers und des thermoplastischen Polymers kontinuierlich durchgeführt wird, gleichzeitig während des Schmelzmischens bei einer Temperatur, die gleich oder größer als der höchste Schmelzpunkt der Polymere und niedriger als die niedrigste Zersetzungstemperatur der Polymere ist eine Reaktion miteinander hervorgerufen wird, wodurch die kontinuierliche Herstellung des molekularen Verbundmaterials ermöglicht wird, wobei die Vorrichtung eine Doppelschraubenkunststoffmühle, ein Doppelschraubenextruder oder ein Doppelschraubenmischer ist, und wobei das thermoplastische Polymer mindestens eines ist, ausgewählt aus der Gruppe bestehend aus (a) mindestens eines von aliphatischen, aromatischen oder teilweise aromatischen Polyamiden oder Copolyamiden, (b) ein Polycarbonat, (c) ein ABS-Harz, (d) Nylon + ein ABS-Harz, (e) ein Polycarbonat + ein Polyarylat, und (f) ein Polyarylenether + Nylon.

2. Verfahren zur Herstellung eines molekularen Verbundmaterials gemäß Anspruch 1, wobei das Schmelzmischen bei einer Temperatur von 250-320°C für 0,5-30 Minuten durchgeführt wird.

3. Verfahren zur Herstellung eines molekularen Verbundmaterials gemäß Anspruch 1 oder 2, wobei das thermoplastische Polymer ein Polyamid oder ein Copolyamid ist.

4. Molekulares Verbundmaterial erhältlich durch das Verfahren gemäß Anspruch 1 oder Anspruch 2 umfassend ein Flüssigkristall-Polymer und ein thermoplastisches Polymer, wobei das Flüssigkristall-Polymer Polyazomethin oder dessen Copolymer ist und das thermoplastische Polymer mindestens eines ist, ausgewählt aus der Gruppe bestehend aus (a) mindestens eines von aliphatischen, aromatischen oder teilweise aromatischen Polyamiden oder Copolyamiden, (b) ein Polycarbonat, (c) ein ABS-Harz, (d) Nylon + ein ABS-Harz, (e) ein Polycarbonat + ein Polyarylat, und (f) ein Polyarylenether + Nylon.

5. Molekularer Verbundmaterial gemäß Anspruch 4, wobei die Menge des Flüssigkristall-Polymers 10-90 Gewichts % ist, und die Menge des thermoplastischen Polymers 90-10 Gewichts % ist.

6. Molekulares Verbundmaterial gemäß Anspruch 4 oder 5, erhältlich durch Schmelzmischen des Flüssigkristall-Polymers und des thermoplastischen Polymers für 0,5-60 Minuten bei einer Temperatur, die gleich oder höher ist als ein höherer Schmelzpunkt von denen der beiden Polymere und niedriger als eine niedrigere Zersetzungstemperatur von denen der beiden Polymere.

7. Molekulares Verbundmaterial gemäß einem der Ansprüche 4 bis 6, wobei das thermoplastische Polymer (a) mindestens eines von aliphatischen, aromatischen oder teilweise aromatischen Polyamiden oder Copolyamiden ist und wobei das molekulare Verbundmaterial eine elektrostatische Halbwertszeit besitzt, die kürzer ist als die der Polyamide oder Copolyamide.

8. Molekulares Verbundmaterial gemäß Anspruch 7, wobei das molekulare Verbundmaterial eine elektrostatische Halbwertszeit von 100 Sekunden oder weniger besitzt, wobei die elektrostatische Halbwertszeit bei 23 °C und 50 % relativer Feuchtigkeit nach einer Minute Laden bei 10 kV mit einem statischen Onestometer gemessen wird.

9. Molekulares Verbundmaterial gemäß einem der Ansprüche 4 bis 8, wobei das thermoplastische Polymer (e) ein Polycarbonat + ein Polyarylat ist, und wobei die Menge des Flüssigkristall-Polymers 5-95 Gewichts %, die Menge des Polycarbonats 3-93 Gewichts % und die Menge des Polyarylats 2-92 Gewichts % ist.

10. Verfahren gemäß Anspruch 1, wobei das thermoplastische Polymer mindestens eines ist ausgewählt aus der Gruppe bestehend aus (a) mindestens eines von aliphatischen, aromatischen oder teilweise aromatischen Polyamiden oder Copolyamiden, (b) ein Polycarbonat, (c) ein ABS-Harz, (d) Nylon + ein ABS-Harz, (e) ein Polycarbonat + ein Polyarylat, und (f) ein Polyarylenether + Nylon.

11. Verfahren zur Herstellung eines molekularen Verbundmaterials gemäß Anspruch 10, wobei das Schmelzmischen bei einer Temperatur von 230-340 °C durchgeführt wird.

12. Verfahren zur Herstellung eines molekularen Verbundmaterials gemäß Anspruch 11, wobei das Schmelzmischen bei einer Temperatur von 250-320 °C durchgeführt wird.

## Revendications

1. Procédé pour produire un matériau composite moléculaire à partir d'un polymère cristal liquide composé de polyazométhine ou son copolymère et d'un polymère thermoplastique, comprenant l'étape consistant à mélanger à fusion une composition consistant ne ledit polymère cristal liquide et ledit polymère thermoplastique dans un appareil dans lequel le mélange à fusion, dudit polymère cristal liquide et dudit polymère thermoplastique, est conduit en continu, entraînant simultanément une réaction entre eux au cours dudit mélange à fusion, à une température égale ou supérieure au point de fusion le plus élevé desdits polymères et inférieure à la température de décomposition la plus basse desdits polymères, pour permettre ainsi la production continue dudit matériau composite moléculaire, dans lequel ledit appareil est un plastobroyeur à deux vis, une extrudeuse à deux vis ou un mélangeur à deux vis, et dans lequel ledit polymère thermoplastique est au moins un choisi dans le groupe consistant en (a) au moins un des polyamides ou copolyamides aliphatiques, aromatiques ou partiellement aromatiques, (b) un polycarbonate, (c) une résine ABS, (d) du nylon + une résine ABS, (e) un polycarbonate + un polyarylate et (f) un polyarylène éther + du nylon.

2. Procédé pour produire un matériau composite moléculaire selon la revendication 1, dans lequel le mélange à fusion est conduit à une température de 250 à 320° C pendant 0,5 à 30 minutes.

3. Procédé pour produire un matériau composite moléculaire selon la revendication 1 ou 2, dans lequel ledit polymère thermoplastique est un polyamide ou un copolyamide.

4. Matériau composite moléculaire pouvant être obtenu par le procédé selon la revendication 1 ou la revendication 2, comprenant un polymère cristal liquide et un polymère thermoplastique, dans lequel ledit polymère cristal liquide est le polyazométhine ou son copolymère, et ledit polymère thermoplastique est au moins un choisi dans le groupe consistant en (a) au moins un des polyamides ou copolyamides aliphatiques, aromatiques ou partiellement aromatiques, (b) un polycarbonate, (c) une résine ABS, (d) du nylon + une résine ABS, (e) un polycarbonate + un polyarylate et (f) un polyarylène éther + du nylon.

5. Matériau composite moléculaire selon la revendication 4, dans lequel la quantité dudit polymère cristal liquide est de 10 à 90 % en poids et la quantité dudit polymère thermoplastique est de 90 à 10 % en poids.

6. Matériau composite moléculaire selon la revendication 4 ou 5, pouvant être obtenu par mélange à fusion dudit polymère cristal liquide et dudit polymère thermoplastique, à une température égale ou supérieure au point de fusion supérieur des deux polymères et inférieure à la plus inférieure des températures de décomposition des deux polymères, pendant 0,5 à 60 minutes.

7. Matériau composite moléculaire selon l'une quelconque des revendications 4 à 6, dans lequel ledit polymère thermoplastique est (a) au moins un des polyamides ou copolyamides aliphatiques, aromatiques ou partiellement aromatiques, et dans lequel ledit matériau composite moléculaire a une demi-vie électrostatique plus courte que celle des polyamides ou copolyamides

8. Matériau composite moléculaire selon la revendication 7, dans lequel ledit matériau composite moléculaire a une demi-vie électrostatique de 100 secondes ou moins, ladite demi-vie électrostatique étant mesurée, après charge à 10 kV pendant 1 minute, à 23° C et à une humidité relative de 50 % par un onestomètre statique.

9. Matériau composite moléculaire selon l'une quelconque des revendications 4 à 8, dans lequel ledit polymère thermoplastique est (e) un polycarbonate + un polyarylate, et dans lequel la quantité dudit polymère cristal liquide est de 5 à 95 % en poids, la quantité dudit polycarbonate est de 3 à 93 % en poids et la quantité dudit polyarylate est de 2 à 92 % en poids.

10. Procédé selon la revendication 1, dans lequel le polymère thermoplastique est au moins un choisi dans le groupe consistant en (a) au moins un des polyamides ou copolyamides aliphatiques, aromatiques ou partiellement aromatiques, (b) un polycarbonate, (c) une résine ABS, (d) du nylon + une résine ABS, (e) un polycarbonate + un polyarylate et (f) un polyarylène éther + du nylon.

11. Procédé pour produire un matériau composite moléculaire selon la revendication 10, dans lequel le mélange à fusion est conduit à une température de 230 à 340° C.

12. Procédé pour produire un matériau composite moléculaire selon la revendication 11, dans lequel le mélange à fusion est conduit à une température de 250 à 320° C.
